**Europäisches Patentamt**

**European Patent Office**

**Office européen des brevets**

(19)

(11) Publication number: **0 107 450**
A1

(12) ## EUROPEAN PATENT APPLICATION

(21) Application number: **83306205.2**

(22) Date of filing: **13.10.83**

(51) Int. Cl.³: **C 05 F 11/10, C 05 G 1/00**

(30) Priority: **14.10.82 GB 8229422**

(43) Date of publication of application: **02.05.84**
**Bulletin 84/18**

(84) Designated Contracting States: **AT BE CH DE FR GB LI LU NL SE**

(71) Applicant: **UNILEVER PLC, Unilever House Blackfriars P O Box 68, London EC4P 4BQ (GB)**

(84) Designated Contracting States: **GB**

(71) Applicant: **UNILEVER NV, Burgemeester s'Jacobplein 1 P.O. Box 760, NL-3000 DK Rotterdam (NL)**

(84) Designated Contracting States: **BE CH DE FR LI LU NL SE AT**

(72) Inventor: **Griselli, Franco, Via Bolivia 22, Paderno Dugnano Milano (IT)**

(74) Representative: **Mole, Peter Geoffrey et al, UNILEVER PLC Patents Division P.O. Box 68 Unilever House, London EC4P 4BQ (GB)**

(54) Liquid fertilizer composition.

(57) A liquid fertilizer composition suitable for house plants contains a source of nitrogen, phosphorus and potassium together with trace elements and gibberellic acid or a salt thereof. The gibberellic acid is preferably present in an amount of 0.0001 to 0.001% by weight. The fertilizer also preferably contains α-naphthalene acetic acid or a salt thereof, and a perfume, a colourant and a polymeric flocculant.

EP 0 107 450 A1

- 1 -    C.1339

## LIQUID FERTILIZER COMPOSITION

This invention relates to a liquid fertilizer intended for use on houseplants.

In some countries, particularly in the Netherlands, Germany and Italy the growing of houseplants has become a widely practised pastime. To cope with this, specialist fertilizers are available, but in our opinion present products are neither attractive enough from the appearance point of view nor optimally effective.

We have now developed a liquid fertilizer composition which we consider more effective on common houseplants than existing products. If desired this fertilizer may be made extremely attractive visually, which we consider helps its marketing.

According to the present invention there is provided a liquid fertilizer composition suitable for houseplants comprising a source of nitrogen, phosphorus and potassium together with trace elements and, in addition, gibberellic acid or a salt thereof.

Preferably the gibberellic acid is present in an amount of from 0.0001 to 0.001% by weight.

Gibberellic acid is a known compound and has been suggested for use in fertilizer compositions before. It has not however, so far as we are aware, been suggested in a houseplant fertilizer component, and in any case it is

F6E21T

0107450

noteworthy that the level of incorporation, which is a preferred feature of the compositions of the invention, is extremely low in comparison with levels which have been suggested or used previously in fertilizing or controlling the growth of crops.

A second preferred feature of the liquid fertilizer composition of the invention is that it should contain alpha-naphthalene acetic acid.

The main components of the liquid fertilizer composition of the invention are a source of nitrogen, phosphorus and potassium, the essential nutrients for plant growth. The particular source of each element is not especially critical provided that non-toxic sources are chosen, but ammonium nitrate and urea are cost-effective sources of nitrogen and phosphate salts, especially potassium or ammonium phosphates, are preferred sources of phosphorus and, in the case of the former, of potassium. Potassium chloride or potassium sulphate may also be used as a potassium source.

Trace elements will also be present in the compositions of the invention. These include, but are not necessarily limited to, ferrous iron, manganese (2+), cupric copper, zinc, cobalt (2+) and molybdenum (6+), and boron as borate.

The major components providing the nutritional elements will be present in amounts such that they provide a nitrogen, phosphorus and potassium content of up to 15% by weight, and the trace elements in amounts of up to 0.5% by weight.

Other components will optionally be present in minor amounts. These include, but are not limited to, buffering agents and vitamins. Stabilizers may also be present in amounts of up to 2%.

Soluble dyestuffs may be present in solution in the compositions of the invention. Alternatively finely divided pigments may be present and may be temporarily suspended in the composition with the aid of a suspending agent or even premanently suspended if the liquid is formulated to be structured (or non-Newtonian).

Another component which is strongly preferred in the fertilizer compositions of the invention is a perfume. We are not aware of any liquid fertilizers which are perfumed even though most fertilizers are extremely evil smelling. Typical amounts of perfume which will be necessary to mask this smell will be 0.5 to 2% by weight of the composition.

A polymeric flocculant material is also a preferred component of the liquid fertilizer. Plants remain in their containers for the whole of their lives without even a single soil change, which can result in the soil becoming channelled and resistant to wetting. Inclusion of a polymeric film-forming material in the composition can help to retain the initial soil condition. It can also increase the viscosity of the liquid fertilizer which we believe increases its attractiveness to the consumer.

The invention will be further described in the following examples:

Example 1

A liquid fertilizer composition in accordance with the invention was made to the following formulation:

|  | % by weight |
|---|---|
| Ammonium bisphosphate | 11.2 |
| Potassium chloride | 9.5 |
| Urea | 6.5 |
| Ammonium nitrate | 4.8 |
| Tetrasodium ethylenediamine tetraacetate | 1.9 |
| Gibberellic acid | 0.0005 |
| α-Naphthalene acetic acid | 0.01 |
| Citric acid | 0.5 |

$Fe^{++}$ )
$Mn^{++}$ )
$Cu^{++}$ ) a sulphate or chloride  )    trace
$Zn^{++}$ )
$Mo^{6-}$ )

| Boric acid | 0.05 |
|---|---|
| Rhodopol 23 (Trade Mark)* | 0.15 |
| Quinoline yellow dyestuff | 0.002 |
| Sintosol NG green pigment | 0.003 |
| Polyoxyethylene sorbitan monolaurate | 0.05 |
| Demineralised water and perfume | balance to 100.0 |

        * Rhodopol 23 (registered Trade Mark), manufactured by Rhone-Poulenc, is a xanthan gum.

        The method of making the composition was as follows:

        The ethoxylated sorbitan ester nonionic surfactant and the perfume are formed into a pre-mix, the polymer is added and the three components are mixed again to form a fluid paste. This paste is then added to the water which is held at a temperature of 30°C in a mixer, the trace elements are added and mixed in, the major nutrient components are added and the whole mixture is mixed until homogeneous. It may be necessary to heat the mixture to keep it up to the required temperature of 30°C.

Example la

        A liquid fertilizer composition identical with that described in Example 1 was made, except that the gibberellic acid was omitted.

Example 2

In this experiment sets of various cultivars of Pelargonium nonale were fed with various solutions. Each set of cultivars contained 4 groups, each containing 10 individual plants. One group of each set was fed at regular intervals with water, one with a solution containing 5 ml per litre of the fertilizer composition of Example 1, one with a similar solution of the composition of Example 1a, and finally one with a solution containing 5 ml per litre of Gesal (registered trade mark), a commercial liquid fertilizer manufactured and sold by Ciba Geigy Ltd.

The feeding regimen was continued for 2 months, after which the plants were assessed visually using a point scoring system. The results of the assessment of height are shown in Table 2.

Table 2

Height index of various Pelargonium nonale cultivars

| Cultivator | Control (water) | Ex 1 (5 ml) | Ex 1a | Gesal |
|---|---|---|---|---|
| Spring Time Irene | 100 | 134 | 125 | 127 |
| Salmon Irene | 100 | 175 | 153 | 155 |
| Ciampinoi | 100 | 137 | 118 | 126 |
| Topscore | 100 | 170 | 146 | 175 |
| Tavinu | 100 | 126 | 105 | 120 |
| Cattleya | 100 | 166 | 134 | 148 |

It can be seen that in general the height of the group of plants fed with the solution of fertilizer shown in Example 1 is superior to that of the group fed with the fertilizer of Example 1a. This demonstrates the effectiveness of the incorporation of gibberellic acid. The height of the group fed with the fertilizer of Example 1 is also comparable with that of the group fed with the existing product Gesal.

- 6 -  C.1339  0107450

## CLAIMS

1. A liquid fertilizer composition suitable for house plants comprising a source of nitrogen, phosphorus and potassium together with trace elements and, in addition, gibberellic acid or a salt thereof.

2. A liquid fertilizer composition according to claim 1 wherein the gibberellic acid is present in an amount of from 0.0001 to 0.001% by weight.

3. A liquid fertilizer composition according to claim 1 or claim 2 additionally comprising alpha-naphthalene acetic acid or a salt thereof.

4. A liquid fertilizer composition according to claim 1 wherein the trace elements comprise ferrous iron, manganese (2+), cupric copper, zinc, cobalt (2+), molybdenum (6+) and boron as borate, or a mixture thereof.

5. A liquid fertilizer composition according to any one of the preceding claims comprising a perfume.

6. A liquid fertilizer composition according to any one of the preceding claims comprising a polymeric flocculant.

0107450

**European Patent Office**

**EUROPEAN SEARCH REPORT**

Application number

EP 83 30 6205

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-2 842 051 (P.W. BRIAN et al.)<br>* Column 10, lines 21-75; column 9, lines 69-75; column 11, claim 2 * | 1 | C 05 F 11/10<br>C 05 G 1/00 |
| Y | CHEMICAL ABSTRACTS, vol. 86, no. 19, 9th May 1977, page 453, no. 138637v, Columbus, Ohio, US<br>S.A. BAKLY et al.: "Effect of two rates of nitrogen, phosphorus, potassium and gibberellic acid on geranium (pelargonium grandiflorum) plants" & AGRIC. RES. REV. 1975, 53(3), 127-31 | 1 | |
| Y | CH-A- 329 054 (F. MICHELER)<br>* Page 3, claim I, subclaim 1; page 1, lines 15-48 * | 1,4 | **TECHNICAL FIELDS SEARCHED (Int. Cl. ³)** |
| Y | US-A-4 169 716 (H.A. ASHMEAD)<br>* Columns 6,7,8; claims 1,2,3,4,5,6 *<br>--- -/- | 1,4 | C 05 G 1/00 |

The present search report has been drawn up for all claims

| Place of search | Date of completion of the search | Examiner |
|---|---|---|
| THE HAGUE | 10-01-1984 | STEELANDT B. |

EPO Form 1503. 03.82

0107450

European Patent Office

**EUROPEAN SEARCH REPORT**

Application number

EP 83 30 6205

| | **DOCUMENTS CONSIDERED TO BE RELEVANT** | | Page 2 |
|---|---|---|---|
| Category | Citation of document with indication, where appropriate, of relevant passages | Relevant to claim | CLASSIFICATION OF THE APPLICATION (Int. Cl. 3) |
| A | CHEMICAL ABSTRACTS, vol. 87, no. 25, 19th December 1977, page 201, no. 195309j, Columbus, Ohio, US<br>G.I. EL-BANNA et al.: "Foliar application of nitrogen-phosphorus-potassium and gibberellin on young grape vines" & GARTENBAUWISSENSCHAFT 1975, 40(4), 167-9 | | |
| A | CHEMICAL ABSTRACTS, vol. 94, no. 15, 13th April 1981, page 195, no. 115906h, Columbus, Ohio, US<br>T.J. NOWAK: "Effect of gibberellin, auxin and kinetin treatments combined with foliar applied nitrogen-phosphorus-potassium fertilizer on the yield of Capsicum annuum L. fruits and their capsaicin content" & ACTA AGROBOT. 1980, 33(1), 81-92 | | TECHNICAL FIELDS SEARCHED (Int. Cl. 3) |
| A | THE MERCK INDEX, 9th edition, 1976, page 569, no. 4250, Merck & Co., Rahway, US<br>"Gibberellic acid" | | |
| A | US-A-2 977 285 (A.J. BIRCH) | | |
| A | US-A-2 950 288 (C.T. CALAM et al.) | | |

The present search report has been drawn up for all claims

| Place of search<br>THE HAGUE | Date of completion of the search<br>10-01-1984 | Examiner<br>STEELANDT B. |
|---|---|---|